# EUROPEAN PATENT APPLICATION

(11) **EP 3 594 097 A1**
(43) Date of publication of application: **15.01.2020**
(21) Application number: 18764281.4
(22) Date of filing: 07.03.2018
(51) Int. Cl.: B62M 3/00, B62M 1/10, B62M 11/02, B62M 21/00, F16F 15/12, F16F 15/124, F16H 55/30

(54) **ROTATION TRANSMISSION MECHANISM AND BICYCLE EQUIPPED WITH THE ROTATION TRANSMISSION MECHANISM**

(30) Priority: 08.03.2017 JP 2017044078
(71) Applicant: Hamamoto, Yoichiro, Miyazaki 880-0822 (JP); Olympic Group Corporation, Tachikawa-shi Tokyo 190-0012 (JP)
(72) Inventor: HAMAMOTO Yoichiro, Tokyo 101-0051 (JP)
(74) Representative: Becker Kurig Straus
(86) International application number: PCT/JP2018/008687
(87) International publication number: WO 2018/164162

(57) **Abstract**

A rotation transmission mechanism of the invention includes an inner rotating member and an outer rotating member that is rotatably disposed with respect to the inner rotating member. The inner rotating member includes an outer peripheral protruding portion that protrudes toward an outer peripheral side. The outer rotating member includes an annular portion and an inner peripheral protruding portion. The outer peripheral protruding portion has a forward movement surface at a position shifted from a center of the outer peripheral protruding portion in a forward rotational direction in which the rotation transmission mechanism is rotated by forward movement. An elastically deformable portion is disposed between the forward movement surface and the inner peripheral protruding portion. The outer peripheral protruding portion and the annular portion are provided with guide portions that guide the outer peripheral protruding portion so as to slidably move in a rotational direction of the rotation transmission mechanism with respect to the annular portion.

## Description

### Technical Field

The present invention relates to a rotation transmission mechanism, and particularly, to a rotation transmission mechanism used by being mounted on a rotating shaft, such as a crankshaft of a bicycle.

Priority is claimed on Japanese Patent Application No. 2017-044078, filed March 8, 2017, the content of which is incorporated herein by reference.

### Background Art

In the case of a bicycle in which a driver rotates a wheel with human power once the bicycle begins to run, the bicycle can travel with a small force. However, at the time of starting, at the time of acceleration, or at the time of the beginning of pedaling of the bicycle at an uphill or the like, the driver receives particularly a large repulsive force from the bicycle, a portion of input energy bounces back to knees, ankles, the waist, or the like as impact to generate a large load on a human body, and the input energy cannot be efficiently used, which leads to a decrease in the propulsive force. Also, in a case where quick start or quick acceleration of the bicycle is performed, in a case where the bicycle climbs a steep slope, or in a case where the weight of the bicycle driver or the weight of a cargo is heavy, particularly the load (drag) to a human body becomes large, and required energy is also increased accordingly.

In the transmission of a force in the bicycle, the vertical movement of driver's feet is converted into the rotational movement by a crank. For this reason, it is difficult to smoothly transmit leg power to the bicycle particularly at a top dead center and a bottom dead center, an increase in burden on the knee or the ankles is caused, and interruption of torque or decrease of speed occurs. Moreover, in a case where the bicycle travels at a low speed, there are problems in that shaking of the bicycle is likely to occur, and the stability of the traveling decreases.

Thus, in order to solve the above problems, the present inventor suggests "a bicycle equipped with" a rotation transmission mechanism for a bicycle that has an inner rotating member having a rotating shaft and an outer rotating member rotatably disposed at the rotating shaft of the inner rotating member, left and right crank arms that are disposed with a phase difference of 180 degrees at both end portions of the inner rotating member of the rotation transmission mechanism for a bicycle, and pedals that are rotatably disposed at end portions of the crank arms, (refer to PTL 1). Particularly, in this bicycle, the inner rotating member has one or more outer peripheral protruding portions that are integrally formed with the rotating shaft, or are fixed to an outer periphery of the rotating shaft and protrude toward an outer peripheral side of the rotating shaft, the outer rotating member has a side plate portion that is rotatably inserted into the rotating shaft at a side portion position of the outer peripheral protruding portion of the inner rotating member, an outer tube portion that is concentrically erected from an outer periphery of the side plate portion concentrically with the rotating shaft outside the outer peripheral protruding portion of the inner rotating member, and one or more inner peripheral protruding portions that are integrally formed with the side plate portion and/or the outer tube portion or are fixed to the side plate portion and/or the outer tube portion and are alternately disposed with the outer peripheral protruding portions of the inner rotating member so as to protrude toward an inner peripheral side of the outer tube portion, a chain ring is formed at or fixed to the side plate portion or the outer tube portion of the outer rotating member, an elastically deformable portion is disposed between the outer peripheral protruding portion and the inner peripheral protruding portion on a rotational direction side of the outer peripheral protruding portion when moving forward, and the elastically deformable portion is sandwiched between the outer peripheral protruding portion and the inner peripheral protruding portion and is elastically deformed when the inner rotating member and the outer rotating member rotate relative to each other.

According to the bicycle disclosed in PTL 1, the following effects are obtained.
(1) By disposing the rotation transmission mechanism for a bicycle at the rotating shaft of the bicycle that travels by rotating the wheel with the human power, the rotation transmission mechanism for a bicycle can reliably absorb and accumulate shock energy or excessive input energy, which is generated due to a large load that is received from the outside at the time of a first movement, such as starting, acceleration, and hill climbing, or during traveling and can markedly reduce the load to a human body.
(2) The rotation transmission mechanism for a bicycle can effectively use the accumulated energy without waste for the rotation of the rotating shaft when the input energy has decreased or has interrupted, and can achieve the certainty of rotation transmission, excellent efficiency, and weight reduction with a small number of parts and a simple configuration.
(3) The rotation transmission mechanism for a bicycle is easy in disassembling or assembling, is excellent in maintainability and productivity, can be simply incorporated into existing bicycles, and is excellent in mass productivity, assembling workability, space saving, and versatility. By including such a rotation transmission mechanism for bicycles, the load applied to a user's muscles or the like can be reduced.
(4) Even when a heavy load is carried or even when a person with heavy weight is carried on the bicycle, the rotation transmission mechanism for a bicycle is excellent in acceleration performance, the uniformity of rotary torque, and the stability at low-speed driving, has no complicated operations, and can reduce the load applied to the driver's knees, ankles, and the like.
(5) Even in a case where a woman or a senior ride on the bicycle or even in a case where a housewife or the like is the driver when a heavy load or a child is carried on the bicycle, the bicycle equipped with the rotation transmission mechanism for a bicycle can be easily driven. Additionally, not only bicycles as daily necessities that can be comfortably run even on slopes or roads with large resistance can be utilized, but also bicycles, which are excellent in acceleration performance, the uniformity of rotary torque, and the stability at low-speed driving, can also be used as the object for rehabilitation or an object for a game, and are excellent in operation stability, handleability, and versatility, can be provided.

### Citation List

### Patent Literature

[PTL 1] Japanese patent No. 4456179

### Summary of Invention

### Technical Problem

Although the bicycle of PTL 1 achieves the above object, the present inventor has repeated intensive studies in order to further improve the usability of the bicycle of PTL 1, and has completed the invention.

An object of the invention is to provide a rotation transmission mechanism that can realize a bicycle that is excellent in usability than before, and a bicycle equipped with the rotation transmission mechanism.

### Solution to Problem

The present inventor has repeated intensive studies in order to further improve the usability of the bicycle disclosed in PTL 1, and has completed the invention.

In order to achieve the object, a rotation transmission mechanism related to a first aspect of the invention includes an inner rotating member through which a rotating shaft is inserted, and an outer rotating member that is rotatably disposed with respect to the inner rotating member. The inner rotating member includes a disk-shaped inner rotating member body having a rotating shaft insertion hole, and one or a plurality of outer peripheral protruding portions that are integrally formed with the inner rotating member body or are fixed to the inner rotating member body and protrude toward an outer peripheral side of the inner rotating member body. The outer rotating member includes an annular portion that is rotatably disposed with respect to the inner rotating member outside the outer peripheral protruding portion of the inner rotating member, and one or a plurality of inner peripheral protruding portions that are integrally formed with the annular portion or are fixed to the annular portion so as to protrude toward an inner peripheral side of the annular portion and are alternately disposed with the outer peripheral protruding portions of the inner rotating member. The outer peripheral protruding portion has a forward movement surface at a position shifted from a center of the outer peripheral protruding portion in a forward rotational direction in which the rotation transmission mechanism is rotated by forward movement, An elastically deformable portion is disposed between the forward movement surface and the inner peripheral protruding portion that faces the forward movement surface in the forward rotational direction. The elastically deformable portion is sandwiched between the outer peripheral protruding portion and the inner peripheral protruding portion and is elastically deformed when the inner rotating member and the outer rotating member rotate relative to each other. The outer peripheral protruding portion and the annular portion are provided with guide portions that guide the outer peripheral protruding portion so as to slidably move in a rotational direction of the rotation transmission mechanism with respect to the annular portion.

Here, in the rotation transmission mechanism, an elastically deformable portion is disposed between the outer peripheral protruding portion of the inner rotating member, and the inner peripheral protruding portion of the outer rotating member on a rotational direction side of the outer peripheral protruding portion when the bicycle moving forward, that is, between the forward movement surface of the outer peripheral protruding portion, and the inner peripheral protruding portion that faces the forward movement surface in the forward rotational direction. The elastically deformable portion is sandwiched between the outer peripheral protruding portion and the inner peripheral protruding portion and is elastically deformed when the inner rotating member and the outer rotating member rotate relative to each other. By providing the rotation transmission mechanism having such a structure, for example, in the rotating shaft of the bicycle, shock energy or excessive input energy, which is generated due to a large load that is received from the outside at the time of a first movement, such as starting, acceleration, and hill climbing, or during traveling, can be reliably absorbed and accumulated, and the load to a human body can be markedly reduced. The accumulated energy can be effectively used without waste for the rotation of the rotating shaft when the accumulated input energy has decreased or has interrupted.

Meanwhile, even in the above rotation transmission mechanism, when the outer rotating member has rotated with respect to the inner rotating member, there is a case where a slight deviation may occur between the two rotating members (the inner rotating member and the outer rotating member) in a three-dimensional direction (an axis in the direction of the inertia moment for the rotation) perpendicular to the rotational direction.

According to the configuration of the rotation transmission mechanism related to the first aspect of the invention, the outer peripheral protruding portion of the inner rotating member and the annular portion of the outer rotating member are provided with a guide portion that guides the outer peripheral protruding portion such that the outer peripheral protruding portion slidably moves in the rotational direction with respect to the annular portion.

Accordingly, when the outer rotating member has rotated with respect to the inner rotating member, the movement of the inner rotating member in the rotational direction is guided by the guide portion. Thus, fluctuation (deviation) can be prevented from occurring between the inner rotating member and the outer rotating member in the rotating shaft direction.

Therefore, the loss of the rotational force resulting from the above-described fluctuation in the rotating shaft direction can be reduced. Additionally, for example, other members (for example, a side plate portion and a cover portion for slidably holding the inner rotating member inside the annular portion of the outer rotating member) for rotating the inner rotating member in the same direction as the outer rotating member can also be omitted. For this reason, it is possible to reduce the number of parts, the operating efficiency of assembling is improved, and the possibility of failure resulting from problems, such as joining between components, can be reduced.

Hence, the rotation transmission mechanism that can realize a bicycle that is more excellent in usability than before can be provided.

In the rotation transmission mechanism related to the first aspect of the invention, the guide portion is formed in each of two surfaces of the outer peripheral protruding portion and the annular portion that face each other. A groove may be formed in one surface of the two surfaces of the outer peripheral protruding portion and the annular portion. In this case, a projection to be inserted into the groove may be formed on the other surface.

According to this configuration in the guide portion, the groove is formed in one surface of the two surfaces of the outer peripheral protruding portion and the annular portion that face each other, and the projection to be inserted into the groove is provided on the other surface.

Accordingly, by inserting the projection provided on the other surface into the groove provided in the one surface when the outer rotating member is attached to the inner rotating member, the outer rotating member can be assembled to an appropriate position of the inner rotating member. Thus, the operating efficiency is improved.

In the rotation transmission mechanism related to the first aspect of the invention, the outer rotating member includes a first outer member, a second outer member that is fixed so as to overlap the first outer member, and a groove that is the guide portion formed between the first outer member and the second outer member, The inner rotating member is disposed between the first outer member and the second outer member, and has a projection that is the guide portion that located at a distal end of the outer peripheral protruding portion.
The projection may be inserted into an inside of the groove.

In the rotation transmission mechanism related to the first aspect of the invention, the outer rotating member includes a projection that is the guide portion provided on the annular portion. The inner rotating member includes a first inner member having a first protruding section, a second inner member that is fixed so as to overlap the first inner member and has a second protruding section, and a groove that is the guide portion formed between the first protruding section and the second protruding section. The projection may be inserted into an inside of the groove.

A bicycle related to a second aspect of the invention includes the rotation transmission mechanism related to the first aspect.

According to this configuration, since the rotation transmission mechanism that does the effects as described above is included, the bicycle that is excellent in usability than before can be provided.

### Advantageous Effects of Invention

According to the invention, the rotation transmission mechanism that can realize a bicycle that is more excellent in usability than before, and the bicycle, can be provided.

### Brief Description of Drawings

Fig. 1 is a plan view illustrating a front surface of a rotation transmission mechanism in Embodiment 1 of the invention.
Fig. 2 is a plan view illustrating a back surface of the rotation transmission mechanism in Embodiment 1 of the invention.
Fig. 3 is a sectional view taken along line III-III illustrated in Fig. 1.
Fig. 4A is a plan view illustrating a front surface of an outer rotating member that constitutes the rotation transmission mechanism in Embodiment 1 of the invention.
Fig. 4B is a plan view illustrating a front surface of an inner rotating member that constitutes the rotation transmission mechanism in Embodiment 1 of the invention.
Fig. 4C is a plan view illustrating a front surface of a cover portion that constitutes the rotation transmission mechanism in Embodiment 1 of the invention.
Fig. 5 is a plan view illustrating a back surface of the inner rotating member that constitutes the rotation transmission mechanism in Embodiment 1 of the invention.
Fig. 6A is a view illustrating the front surface of the rotation transmission mechanism in Embodiment 1 of the invention, and is a plan view illustrating a state where the cover portion is detached.
Fig. 6B is an enlarged plan view enlarging a portion indicated by symbol X of Fig. 6A.
Fig. 7 is a view illustrating an example in which the rotation transmission mechanism in Embodiment 1 of the invention is used for a bicycle, and is a sectional view illustrating main portions of the rotation transmission mechanism.
Fig. 8 is a view illustrating the front surface of the rotation transmission mechanism in Embodiment 1 of the invention, and is a plan view illustrating a state where an elastically deformable portion is elastically deformed (compressively deformed) in a state where the cover portion is detached.
Fig. 9 is a plan view illustrating a front surface of a rotation transmission mechanism in Embodiment 2 of the invention.
Fig. 10 is a sectional view taken along line IV-IV illustrated in Fig. 9.
Fig. 11 is a plan view illustrating a front surface of an inner rotating member that constitutes the rotation transmission mechanism in Embodiment 2 of the invention.
Fig. 12 is a plan view illustrating a front surface of an outer rotating member that constitutes the rotation transmission mechanism in Embodiment 2 of the invention.
Fig. 13A is a view illustrating the configuration of a modification example of the inner rotating member illustrated in Fig. 11, and is a plan view illustrating the front surface of the inner rotating member.
Fig. 13B is a view illustrating the configuration of the modification example of the inner rotating member illustrated in Fig. 11, and is a sectional view taken along line V-V illustrated in Fig. 13A.
Fig. 14 is a plan view illustrating a modification example of the outer rotating member illustrated in Fig. 11.
Fig. 15 is a sectional view illustrating a modification example of the rotation transmission mechanism illustrated in Fig. 9.
Fig. 16 is a plan view illustrating a back surface of a rotation transmission mechanism in Embodiment 3 of the invention.
Fig. 17 is a sectional view taken along line A-A illustrated in Fig. 16.
Fig. 18 is a plan view illustrating a first outer member that constitutes the rotation transmission mechanism in Embodiment 3 of the invention.
Fig. 19 is a plan view illustrating a second outer member that constitutes the rotation transmission mechanism in Embodiment 3 of the invention.
Fig. 20 is a plan view illustrating an inner rotating member that constitutes the rotation transmission mechanism in Embodiment 3 of the invention.
Fig. 21 is a plan view illustrating a back surface of a rotation transmission mechanism in Embodiment 4 of the invention.
Fig. 22 is a sectional view taken along line B-B illustrated in Fig. 21.
Fig. 23 is a plan view illustrating an outer rotating member that constitutes the rotation transmission mechanism in Embodiment 4 of the invention.
Fig. 24 is a plan view illustrating an inner rotating member that constitutes the rotation transmission mechanism in Embodiment 4 of the invention.
Fig. 25 is a sectional view illustrating the inner rotating member that constitutes the rotation transmission mechanism in Embodiment 4 of the invention.

### Description of Embodiments

Hereinafter, the invention will be more specifically described using preferred embodiments. However, the following embodiments are merely examples in which the invention is embodied, and the invention is not limited to the embodiments described below.

### [Embodiment 1]

### (Configuration of rotation transmission mechanism)

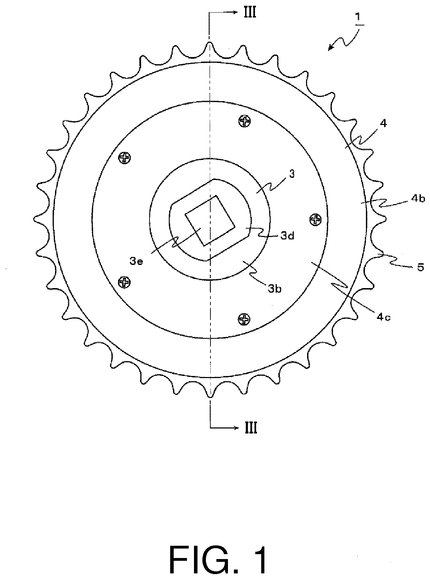

First, the configuration of a rotation transmission mechanism in Embodiment 1 of the invention will be described referring to Figs. 1 to 6B.

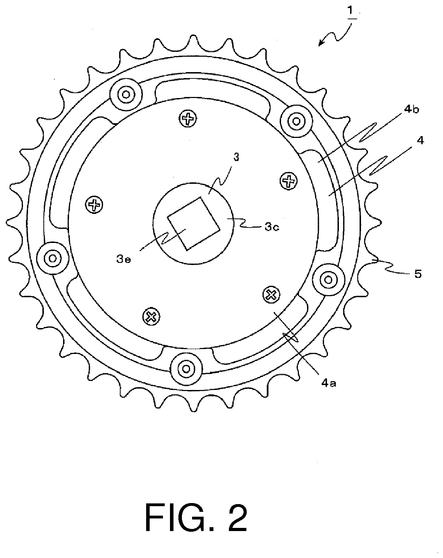

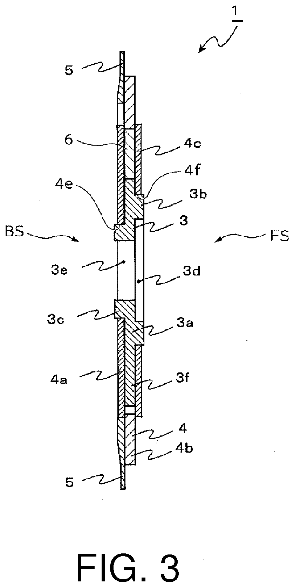

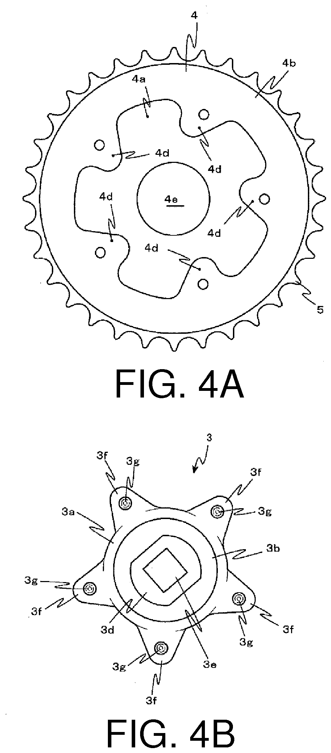

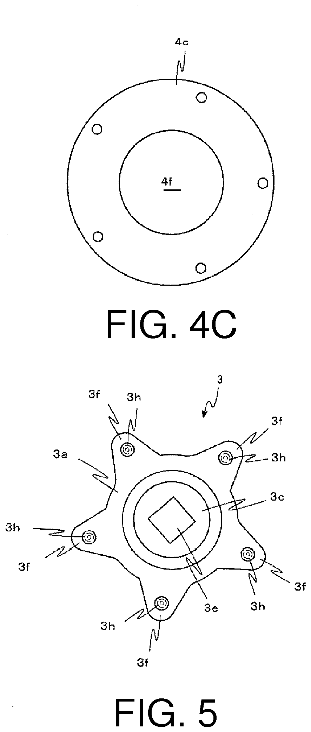

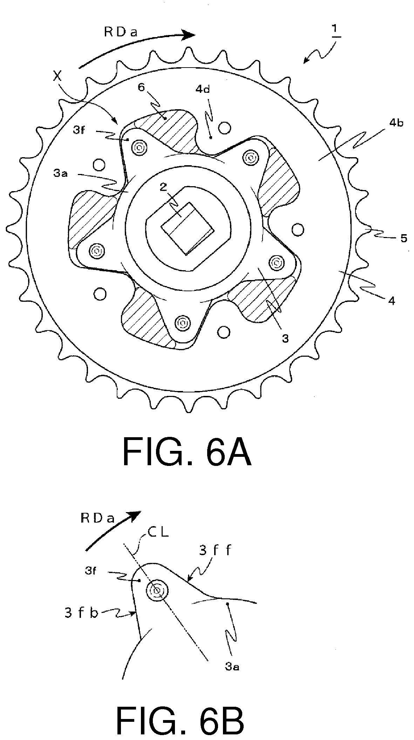

Fig. 1 is a plan view illustrating a front surface of a rotation transmission mechanism in Embodiment 1 of the invention. Fig. 2 is a plan view illustrating a back surface of the rotation transmission mechanism. Fig. 3 is a sectional view taken along line III-III illustrated in Fig. 1. Fig. 4A is a plan view illustrating a front surface of an outer rotating member that constitutes the rotation transmission mechanism. Fig. 4B is a plan view illustrating a front surface of an inner rotating member that constitutes the rotation transmission mechanism. Fig. 4C is a plan view illustrating a front surface of a cover portion that constitutes the rotation transmission mechanism. Fig. 5 is a plan view illustrating a back surface of the inner rotating member that constitutes the rotation transmission mechanism. Fig. 6A is a view illustrating the rotation transmission mechanism, and is a plan view illustrating a state where the cover portion is detached. Fig. 6B is an enlarged plan view enlarging a portion indicated by symbol X of Fig. 6A.

In Fig. 3, symbol FS indicates the front surface of the rotation transmission mechanism, and symbol BS indicates the back surface of the rotation transmission mechanism. That is, a plan view indicated by symbol FS corresponds to Fig. 1, and a plan view indicated by symbol BS corresponds to Fig. 2.

As illustrated in Figs. 1 to 6B, a rotation transmission mechanism 1 related to the present embodiment includes, for example, an inner rotating member 3 through which a rotating shaft, such as a crankshaft of a bicycle, is inserted, an outer rotating member 4 that is rotatably disposed with respect to the inner rotating member 3, and elastically deformable portions 6 (elastically deformable bodies).

### (Inner rotating member)

The inner rotating member 3 includes a disk-shaped inner rotating member body 3a, a columnar protruding portion 3b that is integrally formed with a front surface of the inner rotating member body 3a, a columnar protruding portion 3c that is integrally formed with a back surface of the inner rotating member body 3a, and a press fitting recessed portion 3d that is formed in the protruding portion 3b, a rectangular tubular crankshaft insertion hole 3e (rotating shaft insertion hole) that passes through the protruding portion 3c and the inner rotating member body 3a and reaches the press fitting recessed portion 3d.

As illustrated in Fig. 3, the height (the distance from the front surface of the inner rotating member body 3a to an end surface of the protruding portion 3b in the direction of the crankshaft) of the protruding portion 3b that protrudes from the front surface of the inner rotating member body 3a is larger than the thickness of the cover portion 4c to be described below.

Additionally, the height (the distance from the back surface of the inner rotating member body 3a to an end surface of the protruding portion 3c in the direction of the crankshaft) of the protruding portion 3c that protrudes from the back surface of the inner rotating member body 3a is larger than the thickness of a side plate portion 4a to be described below.

The press fitting recessed portion 3d has a substantially oval shape as illustrated in Fig. 4B, and has a depth substantially corresponding to the height of the protruding portion 3b as illustrated in Fig. 3.

Additionally, the inner rotating member 3 includes five outer peripheral protruding portions 3f that are integrally formed with the inner rotating member body 3a and protrude from an outer peripheral portion of the inner rotating member body 3a toward the outside. Bearing balls 3g and 3h are rotatably maintained on a front surface and a back surface of each outer peripheral protruding portion 3f, respectively. The balls 3g and 3h are at positions of 45 to 65%, preferably, 58 to 62% with respect to the amount of protruding portion (length) of the outer peripheral protruding portion 3f in a radial direction (a centrifugal direction centering on the crankshaft) of the inner rotating member 3. In other words, if the distance from an outer peripheral surface of the inner rotating member body 3a to an outer end of the outer peripheral protruding portion 3f in the radial direction of the inner rotating member 3 is 100%, the balls 3g and 3h are provided at positions that are 45 to 65%, preferably, 58 to 62% apart from the outer peripheral surface of the inner rotating member body 3a.

As illustrated in Fig. 6B, each of the plurality of outer peripheral protruding portions 3f has a forward movement surface 3ff, and an opposite surface 3fb that is located opposite to the forward movement surface 3ff. In other words, the forward movement surface 3ff is located at a position shifted along a rotational direction RDa (a forward rotational direction, a rotational direction of the rotation transmission mechanism 1 in a case where the bicycle moves forward), that is, at a position on the right side of the outer peripheral protruding portion 3f in Fig. 6B from a centerline CL of the outer peripheral protruding portion 3f in the radial direction of the inner rotating member 3. On the other hand, the opposite surface 3fb is located at a position shifted in a direction opposite to the rotational direction RDa, that is, at a position on the left side of the outer peripheral protruding portion 3f in Fig. 6B from the centerline CL of the peripheral protruding portion 3f in the radial direction of the inner rotating member 3.

### (Outer rotating member)

The outer rotating member 4 includes a side plate portion 4a, an annular portion 4b, and the cover portion 4c. The side plate portion 4a is located next to the outer peripheral protruding portions 3f of the inner rotating member 3, and is rotatable with respect to the protruding portion 3c of the inner rotating member 3. An insertion hole 4e is formed in the side plate portion 4a, and the protruding portion 3c is inserted into the insertion hole 4e. The annular portion 4b is screwed and fixed to an outer periphery of the side plate portion 4a outside the outer peripheral protruding portions 3f of the inner rotating member 3. The cover portion 4c is rotatable with respect to the protruding portion 3b in a state where the cover plate is disposed to face the side plate portion 4a. An insertion hole 4f is formed in the cover portion 4c, and the protruding portion 3b is inserted into the insertion hole 4f. The cover portion 4c is screwed and fixed to the annular portion 4b.

In addition, the inner rotating member 3 is rotated while the bearing balls 3g and 3h held by the front surface and the back surface of the outer peripheral protruding portion 3f roll on the cover portion 4c and the side plate portion 4a, respectively.

Accordingly, the inner rotating member 3 can be smoothly rotated. Additionally, the outer rotating member 4 includes five inner peripheral protruding portions 4d. The inner peripheral protruding portions 4d are integrally formed with the annular portion 4b so as to protrude toward an inner peripheral side of the annular portion 4b, and are disposed alternately with the outer peripheral protruding portions 3f of the inner rotating member 3. Specifically, the plurality of inner peripheral protruding portions 4d and the plurality of outer peripheral protruding portions 3f are disposed such that one outer peripheral protruding portion 3f is disposed between the inner peripheral protruding portions 4d adjacent to each other in the rotational direction of the rotation transmission mechanism 1 and one inner peripheral protruding portion 4d is disposed between the outer peripheral protruding portions 3f adjacent to each other in the rotational direction.

Moreover, a chain ring 5 is fixed to an outer peripheral portion on a back surface side of the annular portion 4b of the outer rotating member 4.

### (Elastically deformable portion)

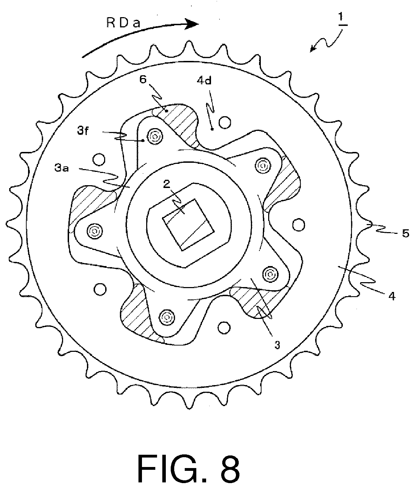

As illustrated in Fig. 3, each elastically deformable portion 6 is made of an elastic member, such as synthetic rubber, and is elastically deformable.
The elastically deformable portion 6 is sandwiched by the cover portion 4c and the side plate portion 4a, and is surrounded by the annular portion 4b. As will be described below, each of elastically deformable portions 6 is sandwiched between the forward movement surface 3ff of the outer peripheral protruding portion 3f and the inner peripheral protruding portion 4d that faces the forward movement surface 3ff in the rotational direction RDa. In addition, although the number of elastically deformable portions 6 illustrated in Figs. 6A and 8 is five, the number of elastically deformable portions 6 is not limited. Each elastically deformable portion 6 transmits a rotational force from the outer rotating member 4 to the inner rotating member 3 while being elastically deformed. Additionally, the elastically deformable portion 6 transmits the energy accumulated in the elastically deformable portion 6 to the inner rotating member 3 as the rotational force.

The rotation transmission mechanism 1 is assembled in the following procedure. That is, first, as illustrated in Fig. 2 and Fig. 3, the side plate portion 4a is screwed and fixed to the annular portion 4b from the back surface side of the annular portion 4b. Next, as illustrated in Fig. 3, Figs. 4A to 4C, and Fig. 6A, the protruding portion 3c located on the back surface side of the inner rotating member 3 is inserted through the insertion hole 4e of the side plate portion 4a from a front surface side FS of the side plate portion 4a toward a back surface side BS thereof. Accordingly, the inner rotating member 3 is disposed within the annular portion 4b. Next, as illustrated in Fig. 1, Fig. 3, and Figs. 4A to 4C, the protruding portion 3b located on the front surface side of the inner rotating member 3 is inserted through the insertion hole 4f of the cover portion 4c, and the cover portion 4c is screwed and fixed to the front surface of the annular portion 4b.

### (Structure of contact of elastically deformable portion with outer peripheral protruding portion and inner peripheral protruding portion)

As illustrated in Figs. 6A and 6B, the elastically deformable portion 6 made of the synthetic rubber is disposed between the forward movement surface 3ff of the outer peripheral protruding portion 3f, and the inner peripheral protruding portion 4d. In other words, the elastically deformable portion 6 is disposed between the outer peripheral protruding portion 3f, and the inner peripheral protruding portion 4d at a position in the rotational direction from the outer peripheral protruding portion 3f when the bicycle moves forward (when the rotation transmission mechanism 1 rotates in the rotational direction RDa). When the inner rotating member 3 and the outer rotating member 4 rotates relatively, the elastically deformable portion 6 is sandwiched between the outer peripheral protruding portion 3f and the inner peripheral protruding portion 4d so as to be elastically deformed (compressively deformed). Here, lateral deformation of the elastically deformable portion 6, that is, deformation of the elastically deformable portion 6 in the axial direction of the rotation transmission mechanism 1 in Fig. 3, is prevented by the side plate portion 4a and the cover portion 4c. Accordingly, as a driver steps on pedals, it is possible to efficiently accumulate a portion of the energy to be input to the rotation transmission mechanism 1 in the elastically deformable portion 6.

As illustrated in Fig. 6B, in the rotation transmission mechanism 1 related to the present embodiment, the area of the surface (the forward movement surface 3ff) of the outer peripheral protruding portion 3f that faces the rotational direction is about 10 to 15%, preferably, about 12 to 13% wider than the area of the surface (the opposite surface 3fb, a surface at a position shifted in the direction opposite to the rotational direction RDa from the centerline CL) that faces the direction opposite to the rotational direction. For this reason, compressive (elastic) energy can be efficiently accumulated in the elastically deformable portion 6 by compressively deforming the elastically deformable portion 6 disposed between the outer peripheral protruding portion 3f and the inner peripheral protruding portion 4d at the position in the rotational direction from the outer peripheral protruding portion 3f when the bicycle moves forward (between the forward movement surface 3ff and inner peripheral protruding portion 4d) with an area (range) wider than before. The compressive (elastic) energy is converted into rotational energy, and is used as a propulsive force of the bicycle or the like.

More specifically, the outer peripheral protruding portion 3f is formed such that the forward movement surface 3ff (the surface that faces the rotational direction) has a tilt gentler than the opposite surface 3fb (the surface that faces the direction opposite to the rotational direction). Moreover, a curved surface that continuously connects the forward movement surface 3ff and the outer peripheral surface of the inner rotating member body 3a is formed at a boundary portion between forward movement surface 3ff (the surface that faces the rotational direction) and the inner rotating member body 3a. By adopting such a shape, the area of the forward movement surface 3ff (the surface that faces the rotational direction) of the outer peripheral protruding portion 3f is made wide. Accordingly, it is possible to make the height (the distance from the outer peripheral surface of the inner rotating member body 3a to the outer end of the outer peripheral protruding portion 3f) of the outer peripheral protruding portion 3f low, and the size of the rotation transmission mechanism 1 can be reduced. Additionally, since the length (distance) of the outer peripheral protruding portion 3f (forward movement surface 3ff) that compresses the elastically deformable portion 6 becomes larger from the outer peripheral surface of the inner rotating member body 3a toward the outer end of the outer peripheral protruding portion 3f, more compressive energy can be accumulated.

Additionally, since the centrifugal force during the rotation of the rotation transmission mechanism 1 can be adjusted by adjusting the thickness of the annular portion 4b, a rotational inertia force can be adjusted.

The surface of the inner peripheral protruding portion 4d that faces the forward movement surface 3ff (the surface that faces the rotational direction) of the outer peripheral protruding portion 3f is formed in a recessed state. For this reason, the amount of the elastically deformable portion 6, which is disposed between the outer peripheral protruding portion 3f, and the inner peripheral protruding portion 4d at the position in the rotational direction from the outer peripheral protruding portion 3f when the bicycle moves forward (between the forward movement surface 3ff and the inner peripheral protruding portion 4d), can be increased. Therefore, a sufficient amount of the compressive (elastic) energy to be utilized as the propulsive force can be accumulated in the elastically deformable portion 6. It is preferable that the volume of an inner space of a recess to be formed by this recess is 2 to 5% with respect to the volume of the elastically deformable portion 6. This is because the compression of the elastically deformable portion 6 is insufficient if this recessed portion is excessively large.

### (Usage example of rotation transmission mechanism)

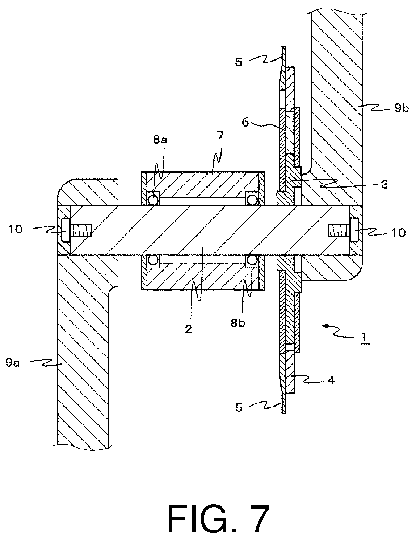

Next, a usage example of the rotation transmission mechanism 1 in the present embodiment will be described also referring to Fig. 7 and Fig. 8.

Fig. 7 is a view illustrating an example in which the rotation transmission mechanism in Embodiment 1 of the invention is used for the bicycle, and is a sectional view illustrating main portions of the rotation transmission mechanism. Fig. 8 is a view illustrating the rotation transmission mechanism, and is a plan view illustrating a state where the elastically deformable portion is elastically deformed (compressively deformed) in a state where the cover portion 4c is detached.

As illustrated in Fig. 7, a crankshaft 2 of the bicycle serving as the rotating shaft is rotatably held via left and right ball bearings 8a and 8b by a crankshaft holding portion 7 integral with a frame of the bicycle. A right end portion of the crankshaft 2 is inserted into and fixed to a crankshaft insertion hole 3e (refer to Fig. 3) of the inner rotating member 3, and thereby, the rotation transmission mechanism 1 is mounted on the crankshaft 2. Additionally, crank arms 9a and 9b are fixed to both left and right ends of the crankshaft 2 with a phase difference of 180 degrees from each other. In Fig. 7, reference sign 10 is a crank arm fixing member for fixing the crank arms 9a and 9b to the crankshaft 2. The crankshaft 2 is fitted to a quadrilateral tube of the crankshaft insertion hole 3e of the inner rotating member 3, and both rotate integrally.

Rotatable pedals (not illustrated) are disposed at end portions of the crank arms 9a and 9b.

The operation of the rotation transmission mechanism 1 mounted on the crankshaft 2 of the bicycle as described above will be described, referring to Figs. 6A to 8.

In Fig. 7, if the driver steps on the pedals (not illustrated) disposed at the end portions of the crank arms 9a and 9b, the outer peripheral protruding portion 3f provided to protrude from an outer periphery of the inner rotating member body 3a rotates in the direction of an arrow RDa illustrated in Fig. 6A and Fig. 8 together with the crankshaft 2.

Then, if the crankshaft 2 rotates and the outer peripheral protruding portion 3f approaches the inner peripheral protruding portion 4d, the elastically deformable portion 6 is compressed by being sandwiched between the outer peripheral protruding portion 3f (forward movement surface 3ff) and the inner peripheral protruding portion 4d, and a portion of the input energy is accumulated in the elastically deformable portion 6.

The elastically deformable portion 6 is elastically deformed in early stages of the rotation of the crankshaft 2 (Fig. 6A -> Fig. 8). However, after the deformation of the elastically deformable portion 6, the rotational force of the crankshaft 2 is transmitted from the outer peripheral protruding portion 3f to inner peripheral protruding portion 4d, and, the crankshaft 2 to the chain ring 5 substantially rotate substantially integrally. The rotational force is reliably transmitted to a sprocket provided on a rear wheel side of the bicycle via a chain (not illustrated) stretched on the chain ring 5.

The elastically deformable portion 6, which has been elastically deformed (compressively deformed), is restored when the input of the energy from the pedals to the rotation transmission mechanism 1 is interrupted or weakened, presses the inner peripheral protruding portion 4d as restoration energy, rotates the outer rotating member 4 and the chain ring 5 in a traveling direction. That is, the compressive (elastic) energy of the elastically deformable portion 6 is converted into the rotational energy, and is used as the propulsive force of the bicycle.

In addition, in the present embodiment, although the case where the five outer peripheral protruding portions 3f and the five inner peripheral protruding portions 4ds are provided has been described taken as an example, the invention is not necessarily limited to such a configuration. The number of outer peripheral protruding portions 3f and the number of inner peripheral protruding portions 4d are one or more, respectively. However, in order to transmit the force accumulated by the elastically deformable portion 6 in a circumferential direction, it is preferable that the number of outer peripheral protruding portions 3f and the number of inner peripheral protruding portions 4d are four or more. Additionally, in order to sufficiently secure the volume of the elastically deformable portion 6, it is preferable that the numbers of outer peripheral protruding portions 3f and the inner peripheral protruding portions 4d are eight or less.

Additionally, in the present embodiment, the case where each outer peripheral protruding portion 3f is integrally formed with the inner rotating member body 3a has been described as an example. However, the invention is not necessarily limited to such a configuration. The outer peripheral protruding portion may be fixed to the inner rotating member body.

Additionally, in the present embodiment, the case where the inner peripheral protruding portion 4d is integrally formed with the annular portion 4b has been described as an example. However, the invention is not necessarily limited to such a configuration. The inner peripheral protruding portion may be fixed to the annular portion.

Additionally, in the present embodiment, the case where the elastically deformable portion 6 is made of the synthetic rubber has been described as an example. However, the invention is not necessarily limited to such a configuration.

The elastically deformable portion is sufficient as long as the elastically deformable portion can be elastically deformed (compressively deformed) when the inner rotating member 3 and the outer rotating member 4 rotate relative to each other, and can transmit the rotation between the inner rotating member 3 and the outer rotating member 4 after the deformation, and the shape, size, deformation amount, elastic modulus, and the like of the elastically deformable portion can be appropriately selected according to a user's preference. As the elastically deformable portion, in addition to the synthetic rubber, for example, the gas enclosed between the outer peripheral protruding portion 3f and the inner peripheral protruding portion 4d can also be used.

### [Embodiment 2]

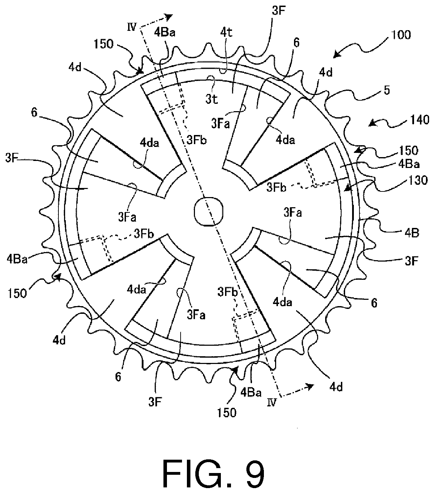

Next, the configuration of a rotation transmission mechanism in Embodiment 2 of the invention will be described referring to Figs. 9 to 12. In addition, in the following description, the same constituent elements as those of Embodiment 1 will be designated by the same reference signs, and the detailed description thereof will be omitted.

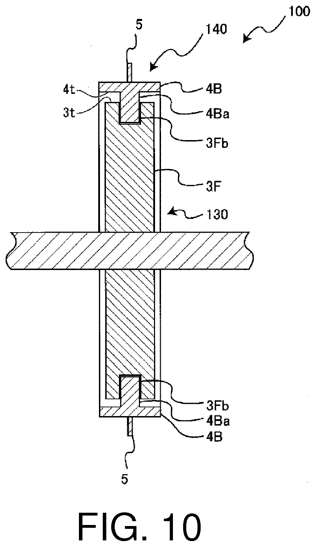

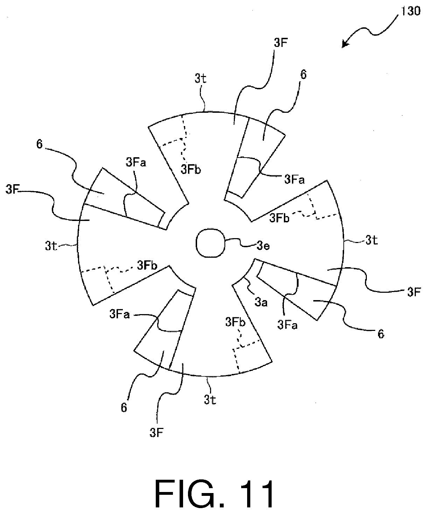

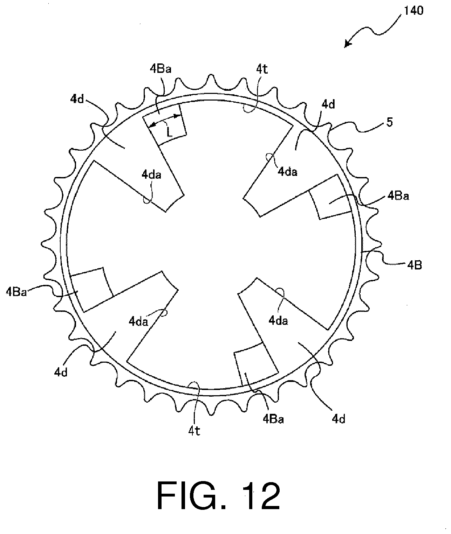

Fig. 9 is a plan view illustrating a front surface of a rotation transmission mechanism in Embodiment 2 of the invention. Fig. 10 is a sectional view taken along line IV-IV illustrated in Fig. 9. Fig. 11 is a plan view illustrating a front surface of an inner rotating member that constitutes the rotation transmission mechanism. Fig. 12 is a plan view illustrating a front surface of an outer rotating member that constitutes the rotation transmission mechanism.

The rotation transmission mechanism 100 related to Embodiment 2 is different from Embodiment 1 in that the inner rotating member 130 and the outer rotating member 140 are engaged with each other by guide portions 150 without providing the cover portion or the like.

A rotation transmission mechanism 100 related to Embodiment 2 includes, for example, an inner rotating member 130 through which the rotating shaft, such as the crankshaft of the bicycle, is inserted, an outer rotating member 140 that is rotatably disposed with respect to the inner rotating member 130, and the elastically deformable portions 6 (elastically deformable bodies).

### (Inner rotating member)

As illustrated in Fig. 11, the inner rotating member 130 includes the disk-shaped inner rotating member body 3a, a substantially quadrilateral tubular shape crankshaft insertion hole 3e that passes through the inner rotating member body 3a, and four outer peripheral protruding portions 3F that are integrally formed with the inner rotating member body 3a and protrude from the outer peripheral portion of the inner rotating member body 3a toward the outside.

Each outer peripheral protruding portion 3F is formed in a substantially sector shape of which the width increases as separating from the inner rotating member body 3a. As illustrated in Fig. 9, the outer peripheral protruding portion 3F has an inner elastically deformable portion abutting surface 3Fa that faces an outer elastically deformable portion abutting surface 4da of the inner peripheral protruding portion 4d of the outer rotating member 140 to be described below.

The elastically deformable portion 6 is attached to the inner elastically deformable portion abutting surface 3Fa. In an example illustrated in Fig. 11, the inner elastically deformable portion abutting surface 3Fa extends linearly in the radial direction from the center of the inner rotating member body 3a. The present embodiment is not limited to such structure, and a bending portion, which holds a portion of the elastically deformable portion 6, may be provided on the inner elastically deformable portion abutting surface 3Fa. Additionally, a holding portion, which holds the elastically deformable portion 6, may be formed on the inner elastically deformable portion abutting surface 3Fa.

Additionally, the outer peripheral protruding portion 3F has an end surface 3t (an end surface 3t that forms an outer edge of the outer peripheral protruding portion 3F) that faces an end surface 4t on an inner peripheral side of the outer rotating member 140 (refer to Fig. 9 and Fig. 12). A groove 3Fb engraved in the direction of the inner rotating member body 3a is formed substantially at the center of the outer peripheral protruding portion 3F in a thickness direction (leftward-rightward direction in Fig. 10) in the end surface 3t. The groove 3Fb is formed in a circular-arc shape along an inner periphery of the outer rotating member 140 (refer to Fig. 9).

### (Modification example of inner rotating member)

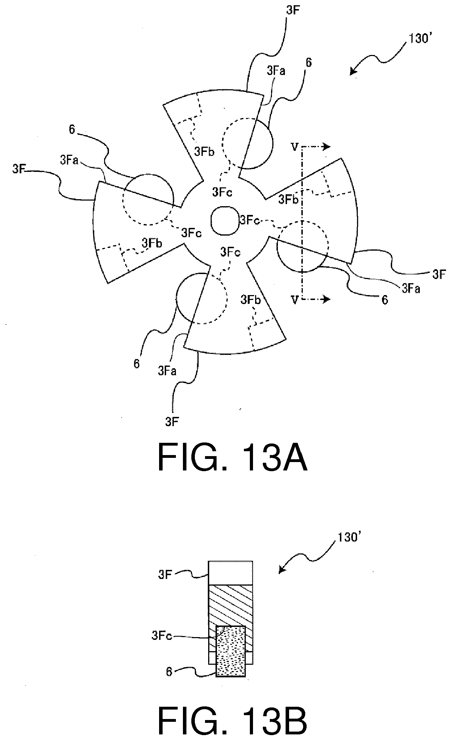

Figs. 13A and 13B are views illustrating the configuration of a modification example of the inner rotating member illustrated in Fig. 11. Fig. 13A is a plan view illustrating a front surface of the inner rotating member. Fig. 13A is a sectional view taken along line V-V illustrated in Fig. 13B.

In the present modification example, an inner rotating member 130' has the outer peripheral protruding portion 3F in which a cutout is formed in the inner elastically deformable portion abutting surface 3Fa. That is, a notched portion 3Fc formed in a semicircular shape as seen from the front surface of the inner rotating member 130' (in a plan view) is formed in the inner elastically deformable portion abutting surface 3Fa. In the present modification example, the elastically deformable portion 6 is formed in a columnar shape formed in a circular shape as seen from the front surface of the inner rotating member 130' (in a plan view). A portion of the elastically deformable portion 6 is inserted into the notched portion 3Fc, and the other portion of the elastically deformable portion 6 protrudes from the inner elastically deformable portion abutting surface 3Fa. In this way, by providing the notched portion 3Fc to insert a portion of the notched portion 3Fc into a portion of the elastically deformable portion 6, for example, the use of the rotation transmission mechanism 100 prevents the elastically deformable portion 6 from deviating from the rotation transmission mechanism 100.

### (Outer rotating member)

As illustrated in Fig. 12, the outer rotating member 140 includes an annular portion 4B and the four inner peripheral protruding portions 4d. The annular portion 4B is rotatably disposed with respect to the inner rotating member 130 outside the outer peripheral protruding portions 3F (refer to Fig. 9) of the inner rotating member 130. Each of the four inner peripheral protruding portions 4d is provided so as to protrude from an inner peripheral portion of the annular portion 4B toward the inside. The four inner peripheral protruding portions 4d may be integrally formed with the annular portion 4B, or may be fixed to the annular portion 4B. The four inner peripheral protruding portions 4d are alternately disposed with the four outer peripheral protruding portions 3F that constitute the inner rotating member 130. Specifically, the four inner peripheral protruding portions 4d and the four outer peripheral protruding portions 3F are disposed such that one outer peripheral protruding portion 3F is disposed between the inner peripheral protruding portions 4d adjacent to each other in the rotational direction of the rotation transmission mechanism 100 and one inner peripheral protruding portion 4d is disposed between the outer peripheral protruding portions 3F adjacent to each other in the rotational direction.

The annular portion 4B is formed in an annular shape, and the chain ring 5 is fixed to an outer peripheral portion (a side opposite to the end surface 4t) of the annular portion 4B.

Additionally, a projection 4Ba is formed on the annular portion 4B. The projection 4Ba protrudes from the end surface 4t on the inner peripheral side of the outer rotating member 140 toward the inside (inner rotating member 130), and the projection 4Ba to slidably inserted into the groove 3Fb (refer to Fig. 11) of the outer peripheral protruding portion 3F is formed in a circular-arc shape along an inner periphery of the annular portion 4B.

Additionally, it is desirable that a length L of the projection 4Ba along the circumference of the annular portion 4B is made shorter than the length of the elastically deformable portion 6 along the circumference of the annular portion 4B in a state of being not compressed. Accordingly, the rotation transmission mechanism 100 can be assembled in the following procedure. First, the inner rotating member 130 to which the elastically deformable portion 6 is not attached is disposed such that the outer peripheral protruding portion 3F is inserted into a portion in which the projection 4Ba of the outer rotating member 140 is not formed. In this state, the inner rotating member 130 is rotated, and the projection 4Ba is inserted into the groove 3Fb. Thereafter, the rotation transmission mechanism 100 is assembled by attaching the elastically deformable portion 6 to the rotation transmission mechanism 100 such that the elastically deformable portion 6 is disposed between the outer elastically deformable portion abutting surface 4da and the inner elastically deformable portion abutting surface 3Fa. Additionally, it is desirable that the length L of the projection 4Ba along the circumference of the annular portion 4B is longer than the length of the elastically deformable portion 6 along the circumference of the annular portion 4B in a state of being compressed to the maximum. Accordingly, when the rotation transmission mechanism 100 is used, the inner rotating member 130 can be prevented from coming off the outer rotating member 140 when the elastically deformable portion 6 is compressed to the maximum.

In addition, it is desirable to dispose members (a coating of lubricant powder, a bearing, or the like), which reduce the friction in a case where the members come into contact with each other, on the surfaces of the groove 3Fb and the projection 4Ba that make a sliding contact with each other.

### (Modification example of outer rotating member)

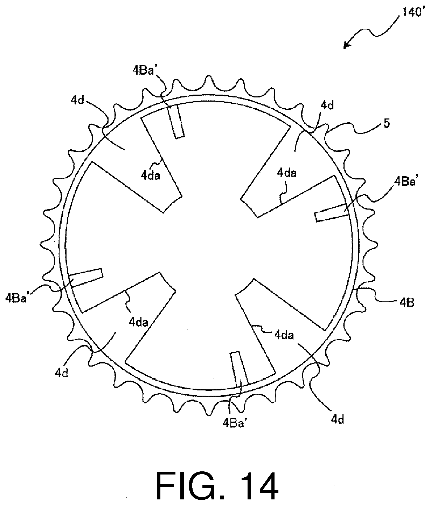

Fig. 14 is a plan view illustrating a modification example of an outer rotating member illustrated in Fig. 11.

Although the projection 4Ba illustrated in Fig. 12 is formed in the circular-arc shape, a projection 4Ba' is formed in a rod shape on an outer rotating member 140' in the present modification example. In this way, if the projection of the outer rotating member 140' is slidably insertable into the groove 3Fb that is the outer peripheral protruding portion 3F in a state where the outer rotating member 140' is attached to the inner rotating member 130, the projection of the outer rotating member 140' can be formed in arbitrary shapes.

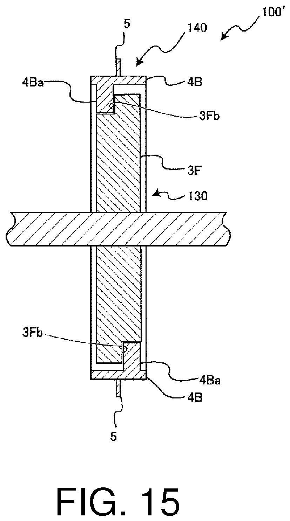

Fig. 15 is a sectional view illustrating a modification example of the rotation transmission mechanism illustrated in Fig. 9.

The groove 3Fb and the projection 4Ba of the rotation transmission mechanism 100 illustrated in Fig. 9 are formed substantially at the center in a thickness direction of the outer peripheral protruding portion 3F. However, in the rotation transmission mechanism 100' in the present modification example, the groove 3Fb and the projection 4Ba are formed at one or the other side edge in the thickness direction of the outer peripheral protruding portion 3F. Accordingly, in a case where the inner rotating member 130 is formed using, for example, a die, the inner rotating member can be formed using a normal die without using a slide die for forming a hole. For this reason, it is possible to reduce the production cost. In addition, in this case, it is desirable that, in some outer peripheral protruding portions 3F (for example, half of the total of the outer peripheral protruding portions 3F, that is, two outer peripheral protruding portions 3F in the example of the present embodiment) among the four outer peripheral protruding portions 3F, the groove 3Fb and the projection 4Ba are formed at one side edge (a first side edge) in the thickness direction of each outer peripheral protruding portion 3F. In the two remaining outer peripheral protruding portions 3F, it is desirable that the groove 3Fb and the projection 4Ba are formed at the other side edge (a second side edge located on a side opposite to the first side edge) in the thickness direction of each outer peripheral protruding portion 3F. Accordingly, it is possible to incorporate the inner rotating member 130 in the outer rotating member 140 in a mutually engaged state.

In addition, in the example described above, the groove is formed in the outer peripheral protruding portion 3F in the inner rotating member 130 (130'), and the projection is formed on the annular portion 4B in the outer rotating member 140 (140'). The invention is not limited to such a structure, and the projection may be formed on the outer peripheral protruding portion 3F in the inner rotating member 130 (130'), and the groove may be formed in the annular portion 4B in the outer rotating member 140 (140').

The rotation transmission mechanism 100 related to Embodiment 2 described above is provided in, for example, the bicycle as in Embodiment 1. In this case, if the driver steps on the pedals of the bicycle, the outer peripheral protruding portion 3F of the inner rotating member 130 (130') rotate with respect to the annular portion 4B of the outer rotating member 140 (140'). In this case, as the outer peripheral protruding portion 3F is guided by the groove 3Fb and the projection 4Ba, the inner rotating member 130 (130') rotates without occurrence of fluctuation between the inner rotating member 130 (130') and the outer rotating member 140 (140') in a rotating shaft direction.

In this way, the groove 3Fb and the projection 4Ba functions as a guide portion 150 of guiding the outer peripheral protruding portion 3F such that the outer peripheral protruding portion 3F slidably moves along the rotational direction of the rotation transmission mechanism with respect to the annular portion 4B in the outer peripheral protruding portion 3F and the annular portion 4B.

According to such a rotation transmission mechanism 100 related to Embodiment 2, the outer peripheral protruding portion 3F of the inner rotating member 130 (130') and the annular portion 4B of the outer rotating member 140 (140') is provided with the guide portion 150 to perform guide the outer peripheral protruding portion 3F such that the outer peripheral protruding portion 3F slidably moves in the rotational direction of the rotation transmission mechanism with respect to the annular portion 4B.

Accordingly, when the outer rotating member 140 (140') rotates with respect to the inner rotating member 130 (130'), the movement of the inner rotating member 130 (130') in the rotational direction is guided by the guide portion 150. For this reason, the fluctuation can be prevented from occurring between the inner rotating member 130 (130') and the outer rotating member 140 (140') in the rotating shaft direction.

Therefore, the loss of the rotational force resulting from the above-described fluctuation in the rotating shaft direction can be reduced. Additionally, for example, other members (for example, the side plate portion and the cover portion for slidably holding the inner rotating member inside the annular portion of the outer rotating member) for rotating the inner rotating member 130 (130') in the same direction as the outer rotating member 140 (140') can also be omitted. For this reason, it is possible to reduce the number of parts, the operating efficiency of assembling is improved, and the possibility of failure resulting from problems, such as joining between components that constitute the rotation transmission mechanism, can be reduced.

Hence, the rotation transmission mechanism that can realize a bicycle that is more excellent in usability than before can be provided.

Additionally, according to the rotation transmission mechanism 100, in the guide portion 150, the groove 3Fb is formed in one surface of the surfaces of the outer peripheral protruding portion 3F and the annular portion 4B that face each other, and the projection 4Ba inserted into the groove 3Fb is provided on the other surface.

Accordingly, by inserting the projection 4Ba provided on the other surface into the groove 3Fb provided in the one surface when the outer rotating member 140 (140') is attached to the inner rotating member 130 (130'), the outer rotating member 140 (140') can be assembled to an appropriate position of the inner rotating member 130 (130'). Thus, the operating efficiency is improved.

### [Embodiment 3]

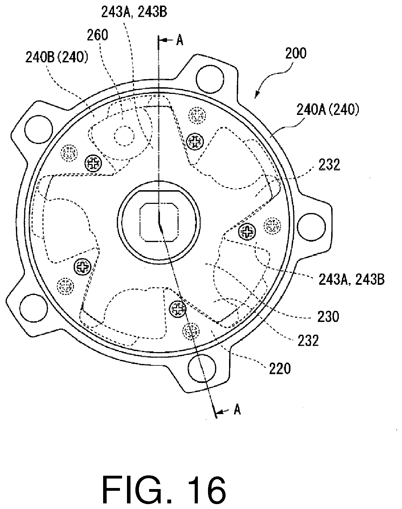

Next, the configuration of a rotation transmission mechanism in Embodiment 3 of the invention will be described referring to Figs. 16 to 20. In addition, in the following description, the same constituent elements as those of Embodiments 1 and 2 will be designated by the same reference signs, and the detailed description thereof will be omitted.

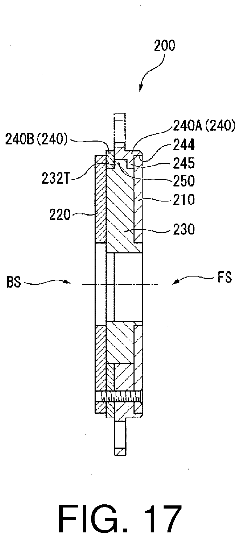

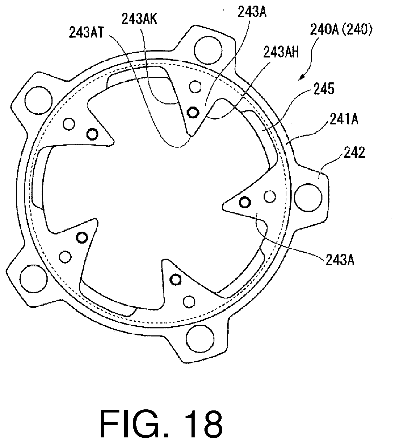

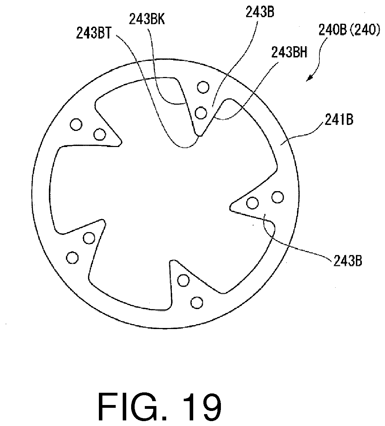

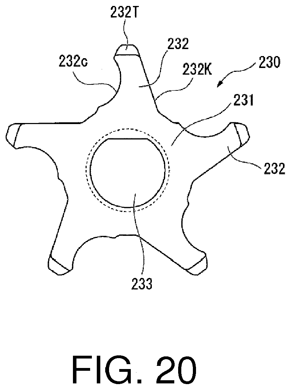

Fig. 16 is a plan view illustrating a back surface (BS) of a rotation transmission mechanism in Embodiment 3 of the invention. Fig. 17 is a sectional view taken along line A-A illustrated in Fig. 16. Fig. 18 is a plan view illustrating a first outer member that constitutes the rotation transmission mechanism. Fig. 19 is a plan view illustrating a second outer member that constitutes the rotation transmission mechanism. Fig. 20 is a plan view illustrating an inner rotating member that constitutes the rotation transmission mechanism.

As illustrated in Figs. 16 to 20, a rotation transmission mechanism 200 related to the present embodiment includes, for example, an inner rotating member 230 through which the rotating shaft, such as the crankshaft of the bicycle, is inserted, an outer rotating member 240 that is rotatably disposed with respect to the inner rotating member 230, and elastically deformable portions 260 (elastically deformable bodies).

### (Outer rotating member)

As illustrated in Figs. 17 and 18, the outer rotating member 240 includes a first outer member 240A, a second outer member 240B that is fixed to the first outer member 240A, a first cover portion 210 that is disposed outside the first outer member 240A, and a second cover portion 220 that is disposed outside the second outer member 240B.

The first cover portion 210 is exposed to the front surface side FS of the rotation transmission mechanism 200, and is screwed and fixed to the first outer member 240A. The second cover portion 220 is exposed to the back surface side BS of the rotation transmission mechanism 200, and is screwed and fixed to the second outer member 240B.

### (First outer member)

As illustrated in Fig. 18, the first outer member 240A includes an annular portion 241A, five chain ring fixing portions 242 that are provided outside the annular portion 241A, five inner peripheral protruding portions 243A that are provided so as to protrude toward the inside of the annular portion 241A, a cover attachment recessed portion 244, and five stepped portions 245 that are provided in the annular portion 241A. The chain ring fixing portions 242 and the inner peripheral protruding portions 243A are integrally formed with the annular portion 241A.

Illustration of the chain ring is omitted in Figs. 16 to 20. The chain ring is capable of being fixed to the chain ring fixing portions 242.

As illustrated in Fig. 17, the first cover portion 210 is fitted to the cover attachment recessed portion 244.

Each of the five inner peripheral protruding portions 243A has a substantially triangular shape having a peak 243AT disposed at a position close to the center of the outer rotating member 240. The peak 243AT is chamfered, and a curved surface is formed at the peak 243AT. Each of the inner peripheral protruding portions 243A has two sides (surfaces) that extend from the peak 243AT toward the annular portion 241A. That is, each of the inner peripheral protruding portions 243A has a radially extending surface 243AH (first surface) that extends from the peak 243AT in the radial direction from the center of the outer rotating member 240 toward the radially outer side, and reaches the annular portion 241A, and an inclined surface 243AK (second surface) that is inclined acutely with respect to the radially extending surface 243AH, extends from the peak 243AT, and reaches the annular portion 241A.

The curved surface is formed at a portion where the radially extending surface 243AH and the annular portion 241A are connected to each other. One end of each stepped portion 245 is located at a portion where the inclined surface 243AK and the annular portion 241A are connected to each other, that is, the inclined surface 243AK is continuous with the stepped portion 245.

A through-hole and a screw hole are formed in each of the inner peripheral protruding portions 243A, and it is possible to fix the second outer member 240B, the first cover portion 210, and the second cover portion 220 to the inner peripheral protruding portion 243A.

As illustrated in Fig. 17, the stepped portion 245 is a portion formed by partially removing one side of the annular portion 241A, and the thickness of the stepped portion 245 in the direction of the crankshaft is smaller than the thickness of the annular portion 241A.

### (Second outer member)

As illustrated in Fig. 19, the second outer member 240B includes an annular portion 241B, and five inner peripheral protruding portions 243B provided so as to protrude toward the inside of the annular portion 241B. The inner peripheral protruding portions 243B are integrally formed with the annular portion 241B. Additionally, the stepped portion 245 is not formed in the second outer member 240B.

Each of the five inner peripheral protruding portions 243B has a substantially triangular shape corresponding to each inner peripheral protruding portion 243A. That is, the inner peripheral protruding portion 243B has a chamfered peak 243BT, a radially extending surface 243BH (first surface), and an inclined surface 243BK (second surface). In other words, the shapes of the radially extending surface 243BH and the inclined surface 243BK, which constitute the inner peripheral protruding portion 243B, are respectively the same as the shapes of the radially extending surface 243AH and inclined surface 243AK, which constitute the inner peripheral protruding portion 243A.

Additionally, the inner diameter of the annular portion 241B is the same as the inner diameter of the annular portion 241A. Therefore, as illustrated in Fig. 17, if the second outer member 240B is fixed so as to overlap the first outer member 240A, in a plan view, the annular portion 241A coincides with the annular portion 241B, and the inner peripheral protruding portion 243A coincides with the inner peripheral protruding portion 243B. Additionally, the annular portion 241B overlaps the annular portion 241A so as to face the stepped portion 245 of the first outer member 240A. Therefore, the groove 250 (guide portion) constituted of the stepped portion 245 and the annular portion 241B is formed between the annular portion 241A and the annular portions 241B. As will be described below, a projection 232T of the outer peripheral protruding portion 232 is inserted into the groove 250, and the projection 232T is slidable inside the groove 250.

### (Inner rotating member)

As illustrated in Fig. 20, the inner rotating member 230 includes an inner rotating member body 231 that is located at the center of the inner rotating member 230, five outer peripheral protruding portions 232 that are integrally formed with the inner rotating member body 231, and a crankshaft insertion hole 233 (rotating shaft insertion hole) that passes through the center of the inner rotating member body 231. As illustrated in Fig. 17, the inner rotating member 230 is disposed between the first outer member 240A and the second outer member 240B, that is, is located at the center of the outer rotating member 240. Additionally, the crankshaft is fixed to the crankshaft insertion hole 233, and the rotational force of the crankshaft is transmitted to the inner rotating member 230.

The five outer peripheral protruding portions 232 have an elongated shape that extends from the center of the inner rotating member 230 toward the radially outer side.

Each of the outer peripheral protruding portions 232 has an inclined surface 232K that is continuous with the outer peripheral protruding portion located next thereto, a curved surface 232C that is formed on a surface opposite to the inclined surface 232K, and the projection 232T (guide portion) that is located at a distal end of the outer peripheral protruding portion 232. The curved surface 232C has a shape according to the outer shape of the elastically deformable portion 260.

The projection 232T is inserted into the inside of the groove 250. In this state, when the inner rotating member 230 has rotated, the projection 232T can slidably move in a limited space such as the inside of the groove 250.

In addition, the thickness of the projection 232T in the direction of the crankshaft and the length of the projection 232T in the radial direction are determined such that the projection 232T slides appropriately with respect to the groove 250. If a gap formed between the projection 232T and the groove 250 is excessively large, the fluctuation is likely to occur between the inner rotating member 230 and the outer rotating member 240, which is not preferable.

### (Structure of contact of elastically deformable portion with outer peripheral protruding portion and inner peripheral protruding portion)

As illustrated in Fig. 16, the outer peripheral protruding portions 232 are alternately disposed with the inner peripheral protruding portions 243A (243B) such that an inner peripheral protruding portion 243A (243B) of the outer rotating member 240 is located next to an outer peripheral protruding portion 232 of the inner rotating member 230t. Specifically, the plurality of inner peripheral protruding portions 243A (243B) and the plurality of outer peripheral protruding portions 232 are disposed such that one outer peripheral protruding portion 232 is disposed between the inner peripheral protruding portions 243A (243B) adjacent to each other in the rotational direction of the rotation transmission mechanism 200, and one inner peripheral protruding portion 243A (243B) is disposed between the outer peripheral protruding portions 232 adjacent to each other in the rotational direction.

The elastically deformable portion 260 is disposed between the radially extending surface 243AH (243BH) of the inner peripheral protruding portion 243A (243B) and the curved surface 232C of the outer peripheral protruding portion 232. Additionally, in the present embodiment, a hole is provided at the center of the elastically deformable portion 260. By adjusting the shape and the size of the hole of the elastically deformable portion 260, it is possible to adjust the easiness and the hardness of deformation of the elastically deformable portion 260.

In the rotation transmission mechanism 200 configured in this way, if the rotational force of the crankshaft is transmitted to the inner rotating member 230, the inner rotating member 230 is rotated relative to the outer rotating member 240, a compressive force is applied to the elastically deformable portion 260 located between the radially extending surface 243AH (243BH) and the curved surface 232C of the outer peripheral protruding portion 232, and the elastically deformable portion 260 is elastically deformed.

In this case, although the projection 232T slides with respect to the groove 250, the projection 232T does not come off the groove 250. In other words, the groove 250 functions as a rail that prevents the inner rotating member 230 from coming off from between the first outer member 240A and the second outer members 240B. For this reason, the inner rotating member 230 rotates without occurrence of the fluctuation between the inner rotating member 230 and the outer rotating member 240. Therefore, the same effects as those of the above-described Embodiment 2 are obtained.

In addition, the invention is not limited to the configuration of the above Embodiment 3. In the example illustrated in Fig. 17, the projection 232T is inserted into the inside of each of the five grooves 250. However, the projection 232T may be inserted into the inside of three grooves among the five grooves 250. In this case, since the total area of a sliding surface between the groove 250 and the projection 232T becomes small, the area of friction between the inner rotating member 230 and the outer rotating member 240 becomes small, and the resistance of reducing the rotational force of the inner rotating member 230 can be made small. In addition, in a case where the projection 232T is inserted into the inside of each of one or two grooves among the five grooves 250, the fluctuation is likely to occur between the inner rotating member 230 and the outer rotating member 240, which is not preferable. Therefore, it is preferable to adopt a structure in which the projections 232T are inserted into the grooves 250 at least at three or more spots.

### [Embodiment 4]

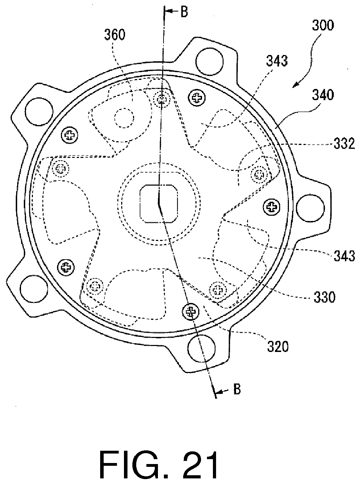

Next, the configuration of a rotation transmission mechanism in Embodiment 4 of the invention will be described referring to Figs. 21 to 25. In addition, in the following description, the same constituent elements as those of Embodiments 1 to 3 will be designated by the same reference signs, and the detailed description thereof will be omitted.

Particularly, in Embodiment 3, the outer rotating member is constituted of the two members, whereas in Embodiment 4, the inner rotating member is constituted of two members. In this point, Embodiment 4 is different from Embodiment 3.

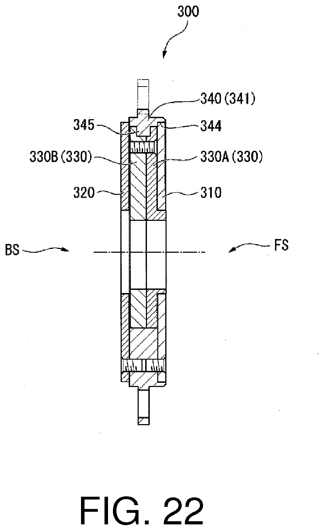

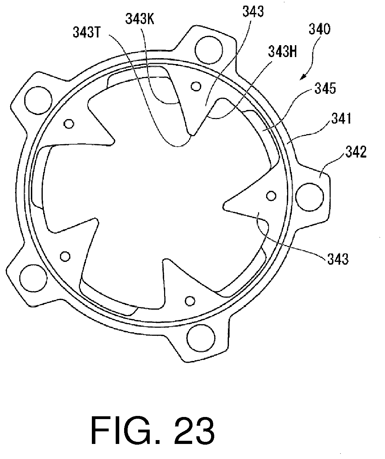

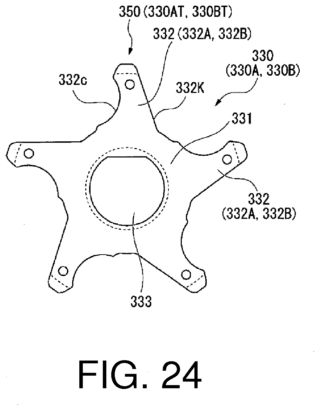

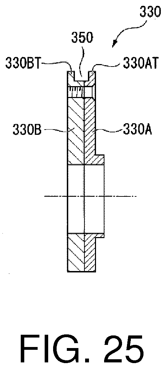

Fig. 21 is a plan view illustrating a back surface (BS) of a rotation transmission mechanism in Embodiment 4 of the invention. Fig. 22 is a sectional view taken along line B-B illustrated in Fig. 21. Fig. 23 is a plan view illustrating an outer rotating member that constitutes the rotation transmission mechanism. Fig. 24 is a plan view illustrating an inner rotating member that constitutes the rotation transmission mechanism. Fig. 25 is a sectional view illustrating the inner rotating member that constitutes the rotation transmission mechanism.

As illustrated in Figs. 21 to 25, a rotation transmission mechanism 300 related to the present embodiment includes, for example, an inner rotating member 330 through which the rotating shaft, such as the crankshaft of the bicycle, is inserted, an outer rotating member 340 that is rotatably disposed with respect to the inner rotating member 330, and elastically deformable portions 360 (elastically deformable bodies).

### (Outer rotating member)

As illustrated in Figs. 22 and 23, the outer rotating member 340 includes an annular portion 341, five chain ring fixing portions 342 that are provided outside the annular portion 341, five inner peripheral protruding portions 343 that are provided so as to protrude toward the inside of the annular portion 341, a cover attachment recessed portion 344, five projections 345 (guide portions) that are provided on the annular portion 341, a first cover portion 310 that is disposed outside the outer rotating member 340 on the back surface side BS of the rotation transmission mechanism 300, and a second cover portion 320 that is fitted to the cover attachment recessed portion 344. The chain ring fixing portions 342 and the inner peripheral protruding portions 343 are integrally formed with the annular portion 341.

Illustration of the chain ring is omitted in Figs. 21 to 25. The chain ring is capable of being fixed to the chain ring fixing portions 342.

The first cover portion 310 is exposed to the front surface side FS of the rotation transmission mechanism 300, and is screwed and fixed to the annular portion 341. The second cover portion 320 is exposed to the back surface side BS of the rotation transmission mechanism 300, and is screwed and fixed to the annular portion 341.

Each of the five inner peripheral protruding portions 343 has a substantially triangular shape having a peak 343T disposed at a position close to the center of the outer rotating member 340. The peak 343T is chamfered, and a curved surface is formed at the peak 343T. Each of the inner peripheral protruding portions 343 has two sides (surfaces) that extend from the peak 343T toward the annular portion 341. That is, each of the inner peripheral protruding portions 343 has a radially extending surface 343H (first surface) that extends from the peak 343T in the radial direction from the center of the outer rotating member 340 toward the radially outer side, and reaches the annular portion 341, and an inclined surface 343K (second surface) that is inclined acutely with respect to the radially extending surface 343H, extends from the peak 343T, and reaches the annular portion 341.

A curved surface is formed at a portion where the radially extending surface 343H and the annular portion 341 are connected to each other. One end of the projection 345 is located at the portion where the inclined surface 343K and the annular portion 341 are connected to each other, that is, the inclined surface 343K is continuous with the projection 345. A screw hole is formed in each of the inner peripheral protruding portions 343, and it is possible to fix the first cover portion 310 and the second cover portion 320 to the inner peripheral protruding portion 343. As illustrated in Fig. 22, the projection 345 is a portion formed by partially removing both surfaces of the annular portion 341, and the thickness of the projection 345 in the direction of the crankshaft is smaller than the thickness of the annular portion 341.

As will be described below, the projection 345 is inserted into the groove 350 (guide portion) of the inner rotating member 330, and the projection 345 is slidable inside the groove 350.

### (Inner rotating member)

As illustrated in Fig. 24, the inner rotating member 330 includes an inner rotating member body 331 that is located at the center of the inner rotating member 330, five outer peripheral protruding portions 332 (332A, 332B) that are integrally formed with the inner rotating member body 331, and a crankshaft insertion hole 333 (rotating shaft insertion hole) that passes through the center of the inner rotating member body 331.

Moreover, as illustrated in Fig. 25, in a sectional view, the inner rotating member 330 includes a first inner member 330A and a second inner member 330B that are mutually separable members. When the first inner member 330A and the second inner member 330B are fixed to each other, screwing and fixing are performed using a screw hole and a through-hole that are provided at distal end regions of the outer peripheral protruding portions 332.

The first inner member 330A has a first protruding section 330AT that is provided at a distal end of the outer peripheral protruding portion 332A.
The second inner member 330B has a second protruding section 330BT that is provided at a distal end of the outer peripheral protruding portion 332B. The inner rotating member 330 including the groove 350 (guide portion) provided in the outer peripheral protruding portion 332 is configured by superimposing the first inner member 330A and the second inner member 330B on each other so that the first protruding section 330AT and the second protruding section 330BT are spaced apart from each other and performing the above-described screwing and fixing. That is, the groove 350 is formed between the first protruding section 330AT and the second protruding section 330BT.

As illustrated in Fig. 24, the five outer peripheral protruding portions 332 have an elongated shape that extends from the center of the inner rotating member 330 toward the radially outer side.

Each of the outer peripheral protruding portions 332 has an inclined surface 332K that is continuous with the outer peripheral protruding portion located next thereto, a curved surface 332C that is formed on a surface opposite to the inclined surface 332K, and the groove 350 (guide portion) that is formed between the first protruding section 330AT and the second protruding section 330BT that are located at the distal ends of the outer peripheral protruding portions 332. The curved surface 332C has a shape according to the outer shape of the elastically deformable portion 360.

Next, a method of attaching the inner rotating member 330 to the outer rotating member 340 will be described. First, the first inner member 330A and the second inner member 330B are separated from each other. Next, the second inner member 330B is disposed within the outer rotating member 340 such that the second protruding section 330BT faces the projection 345 of the outer rotating member 340. Thereafter, the first inner member 330A is disposed within the outer rotating member 340 such that the first protruding section 330AT faces the projection 345 of the outer rotating member 340. Thereafter, the first inner member 330A and the second inner member 330B are screwed and fixed. Accordingly, the projection 345 is inserted into the inside of the groove 350.

In this state, when the inner rotating member 330 has rotated, the projection 345 can slidably move in a limited space such as the inside of the groove 350.

In addition, the thickness of the projection 345 in the direction of the crankshaft and the length of the projection 345 in the radial direction are determined such that the projection 345 slides appropriately with respect to the groove 350. If a gap formed between the projection 345 and the groove 350 is excessively large, the fluctuation is likely to occur between the inner rotating member 330 and the outer rotating member 340, which is not preferable.

In addition, the order in which the first inner member 330A and the second inner member 330B are disposed with respect to the outer rotating member 340 is not limited to above-described order. The first inner member 330A may be first disposed within the outer rotating member 340, and thereafter, the second inner member 330B may be disposed within the outer rotating member 340.

As described above, the inner rotating member 330 is attached to the outer rotating member 340. Accordingly, as illustrated in Fig. 22, the inner rotating member 330 is disposed inside the outer rotating member 340, that is, is located at the center of the outer rotating member 340. Additionally, the crankshaft is fixed to the crankshaft insertion hole 333, and the rotational force of the crankshaft is transmitted to the inner rotating member 330.

### (Structure of contact of elastically deformable portion with outer peripheral protruding portion and inner peripheral protruding portion)

As illustrated in Fig. 21, the outer peripheral protruding portions 332 is alternately disposed with the inner peripheral protruding portions 343 so that an inner peripheral protruding portion 343 of the outer rotating member 340 is located next to an outer peripheral protruding portion 332 of the inner rotating member 330. Specifically, the plurality of inner peripheral protruding portions 343 and the plurality of outer peripheral protruding portions 332 are disposed such that one outer peripheral protruding portion 332 is disposed between the inner peripheral protruding portions 343 adjacent to each other in the rotational direction of the rotation transmission mechanism 300 and one inner peripheral protruding portion 343 is disposed between the outer peripheral protruding portions 332 adjacent to each other in the rotational direction.

The elastically deformable portion 360 is disposed between the radially extending surface 343H of the inner peripheral protruding portion 343 and the curved surface 332C of the outer peripheral protruding portion 332. Additionally, in the present embodiment, a hole is provided at the center of the elastically deformable portion 360. By adjusting the shape and the size of the hole of the elastically deformable portion 360, it is possible to adjust the easiness and the hardness of deformation of the elastically deformable portion 360.

In the rotation transmission mechanism 300 configured in this way, if the rotational force of the crankshaft is transmitted to the inner rotating member 330, the inner rotating member 330 is rotated relative to the outer rotating member 340, a compressive force is applied to the elastically deformable portion 360 located between the radially extending surface 343H and the curved surface 332C of the outer peripheral protruding portion 332, and the elastically deformable portion 360 is elastically deformed.

In this case, although the projection 345 slides with respect to the groove 350, the projection 345 does not come off the groove 350. In other words, the groove 350 functions as a rail that prevents the inner rotating member 330 from coming off from between the outer rotating member 340. For this reason, the inner rotating member 330 rotates without occurrence of the fluctuation between the inner rotating member 330 and the outer rotating member 340. Therefore, the same effects as those of the above-described Embodiments 2 and 3 are obtained.

In addition, the invention is not limited to the configuration of the above Embodiment 4. In an example illustrated in Fig. 22, the projection 345 is inserted in each of the five grooves 350. However, the projection 345 may be inserted in each of the three grooves among the five grooves 350. In this case, the same effects as those of above-described Embodiment 3 are obtained.

In addition, in the present embodiment, the rotation transmission mechanisms 1 and 100 used for the bicycle have been described as examples. However, the rotation transmission mechanisms related to the embodiments of the invention are not necessarily limited to such an application. The rotation transmission mechanisms related to the embodiments of the invention can also be used for mechanisms having wheels, for example, a normal bicycle, an electric assist bicycle, a civil engineering unicycle, a wheelchair, a man-pulled cart, a rear car, and the like, and can obtain the same effects. Additionally, the rotation transmission mechanisms are available not only for movement means but also generators accompanied by general mechanisms accompanied by rotation, for example, rotating mechanisms, such as home electronics, rotation brushes, lawn mowers, and wind power.

Although the preferable embodiments of the invention have been described above, it should be understood that these are merely illustrative examples of the invention, and are not intended to limit the invention. Additions, omissions, substitutions, and other modifications can be made without departing from the scope of the invention. Therefore, the invention is not to be considered as being limited by the foregoing description, and is limited only by the scope of the appended claims.

### Reference Signs List

1, 100, 100, 200, 300: rotation transmission mechanism
2: crankshaft
3, 130, 130, 230, 330: inner rotating member
3A, 231, 331: inner rotating member body
3B, 3C: protruding portion
3D: press fitting recessed portion
3E, 233, 333: crankshaft insertion hole
3F, 3F, 232, 332, 332A, 332B: outer peripheral protruding portion
3FA: inner elastically deformable portion abutting surface
3fb: opposite surface
3FB, 250, 350: groove
3FC: notched portion
3FF: forward movement surface
3G, 3H: bearing ball
3T, 4T: end surface
4, 140, 140, 240, 340: outer rotating member
4A: side plate portion
4B, 4B, 241A, 241B, 341: annular portion
4BA, 4BA', 232T, 345: projection
4C: cover portion
4D, 243A, 243B, 343: inner peripheral protruding portions
4DA: outer elastically deformable portion abutting surface
4E, 4F: insertion hole
5: chain ring
6, 260, 360: elastically deformable portion
7: crankshaft holding portion
8A, 8B: ball bearing
9A, 9B: crank arm
150: guide portion
210, 310: first cover portion
220, 320: second cover portion
232C, 332C: curved surface
232K, 243AK, 243BK, 332K, 343K: inclined surface
240A: first outer member
240B: second outer member
242, 342: chain ring fixing portion
243AH, 243BH, 343H: radially extending surface
243AT, 243BT, 343T: peak
244, 344: cover attachment recessed portion
245: stepped portion
330A: first inner member
330AT: first protruding section
330B: second inner member
330BT: second protruding section

## Claims

1. A rotation transmission mechanism comprising:
an inner rotating member through which a rotating shaft is inserted; and
an outer rotating member that is rotatably disposed with respect to the inner rotating member;
wherein the inner rotating member includes a disk-shaped inner rotating member body having a rotating shaft insertion hole, and one or a plurality of outer peripheral protruding portions that are integrally formed with the inner rotating member body or are fixed to the inner rotating member body and protrude toward an outer peripheral side of the inner rotating member body,
wherein the outer rotating member includes an annular portion that is rotatably disposed with respect to the inner rotating member outside the outer peripheral protruding portion of the inner rotating member, and one or a plurality of inner peripheral protruding portions that are integrally formed with the annular portion or are fixed to the annular portion so as to protrude toward an inner peripheral side of the annular portion and are alternately disposed with the outer peripheral protruding portions of the inner rotating member,
wherein the outer peripheral protruding portion has a forward movement surface at a position shifted from a center of the outer peripheral protruding portion in a forward rotational direction in which the rotation transmission mechanism is rotated by forward movement,
wherein an elastically deformable portion is disposed between the forward movement surface and the inner peripheral protruding portion that faces the forward movement surface in the forward rotational direction,
wherein the elastically deformable portion is sandwiched between the outer peripheral protruding portion and the inner peripheral protruding portion and is elastically deformed when the inner rotating member and the outer rotating member rotate relative to each other, and
wherein the outer peripheral protruding portion and the annular portion are provided with guide portions that guide the outer peripheral protruding portion so as to slidably move in a rotational direction of the rotation transmission mechanism with respect to the annular portion.

2. The rotation transmission mechanism according to claim 1,
wherein the guide portion is formed in each of two surfaces of the outer peripheral protruding portion and the annular portion that face each other, and
wherein a groove is formed in one surface of the two surfaces of the outer peripheral protruding portion and the annular portion, and a projection to be inserted into the groove is formed on the other surface.

3. The rotation transmission mechanism according to claim 1 or claim 2,
wherein the outer rotating member includes a first outer member, a second outer member that is fixed so as to overlap the first outer member, and a groove that is the guide portion formed between the first outer member and the second outer member,
wherein the inner rotating member is disposed between the first outer member and the second outer member and has a projection that is the guide portion that is located at a distal end of the outer peripheral protruding portion, and
wherein the projection is inserted into an inside of the groove,

4. The rotation transmission mechanism according to claim 1 or claim 2,
wherein the outer rotating member includes a projection that is the guide portion provided on the annular portion,
wherein the inner rotating member includes a first inner member having a first protruding section, a second inner member that is fixed so as to overlap the first inner member and has a second protruding section, and a groove that is the guide portion formed between the first protruding section and the second protruding section, and
wherein the projection is inserted into an inside of the groove.

5. A bicycle comprising the rotation transmission mechanism according to any one of claims 1 to 4.
